# EUROPEAN PATENT SPECIFICATION

(11) **EP 4 072 263 B1**
(45) Date of publication and mention of the grant of the patent: **14.10.2026**
(21) Application number: 20816313.9
(22) Date of filing: 20.11.2020
(51) Int. Cl.: A01D 41/127

(54) **METHODS AND IMAGING SYSTEMS FOR HARVESTING**
VERFAHREN UND BILDGEBUNGSSYSTEME ZUM ERNTEN
PROCÉDÉS ET SYSTÈMES D'IMAGERIE POUR LA RÉCOLTE

(30) Priority: 09.12.2019 US 201962945289 P
(43) Date of publication of application: 19.10.2022
(73) Proprietor: Precision Planting LLC, Tremont, IL 61568 (US)
(72) Inventor: SWANSON, Todd, Tremont, Illinois 61568 (US); STOLLER, Jason, Tremont, Illinois 61568 (US); HERRMANN, Aaron, Tremont, Illinois 61568 (US)
(74) Representative: AGCO Intellectual Property Department
(86) International application number: PCT/IB2020/060962
(87) International publication number: WO 2021/116802

(56) References cited:
- EP-A1- 3 284 334
- WO-A1-2014/093814
- US-A1- 2019 021 226
- US-B1- 10 255 670

## Description

### TECHNICAL FIELD

Embodiments of the present disclosure relate to methods and imaging systems for harvesting operations with a harvester.

### BACKGROUND

Planters are used for planting seeds of crops (e.g., com, soybeans) in a field. Some planters include a display monitor within a cab for displaying a coverage map that shows regions of the field that have been planted. The coverage map of the planter is generated based on planting data collected by the planter.

A combine harvester or combine is a machine that harvests crops. A coverage map of a combine displays regions of the field that have been harvested by that combine. A coverage map allows the operator of the combine to know that a region of the field has already been harvested by the same combine. Yield data for a field can then be generated after harvesting the field. The yield data can be analyzed in order to potentially improve agricultural operations for a subsequent growing season.

EP3284334A describes a loss sensor system which utilises a thermal sensing device for detecting harvest loss. WO2014/093814A describes a vision based system for predicting an upcoming machine load. US2019/021226A describes a system which utilises downed crop information for adjusting operative parameters of a harvesting platform.

### BRIEF DESCRIPTION OF THE DRAWINGS

The present disclosure is illustrated by way of example, and not by way of limitation, in the figures of the accompanying drawings and in which:
Figure 1 shows an example of a system for collecting data of agricultural fields and performing analysis of the data of agricultural fields in accordance with one embodiment;
Figure 2 illustrates a flow diagram of one embodiment for a method 200 of adjusting settings of a harvester based on capturing images of field regions;
Figures 3-6 illustrate harvesters with an imaging system (e.g., image sensors, image capturing devices) positioned in different locations on each harvester in accordance with certain embodiments;
Figure 7 shows an example of a system 700 that includes a machine 702 (e.g., tractor, combine harvester, etc.) in accordance with one embodiment;
Figure 8A illustrates an example of a header having an image capturing system in accordance with certain embodiments;
Figure 8B illustrates an example of a header having an image capturing system in accordance with other embodiments;
Figure 9 illustrates mounting an image capturing device under a snout 900 in accordance with one embodiment;
Figure 10 illustrates an image 1000 of unharvesting crop in a first region to be harvested that is adjacent to a second region that has been harvested; and
Figure 11 illustrates an image that has been captured by the imaging system of the harvester after settings of the harvester are adjusted based on analyzing the captured image 1000.

### DETAILED DESCRIPTION

Described herein are methods and imaging systems for harvesting. In one example, a harvester includes at least one image capturing device (e.g., camera) for capturing images of a field view of first region to be harvested that is adjacent to a second region that has been harvested. The captured images are analyzed to determine residue crop from the second region that was discarded by the harvester while harvesting the second region. Parameters of the harvester for the first region can be adjusted based on analyzing the captured images.

In the following description, numerous details are set forth. It will be apparent, however, to one skilled in the art, that embodiments of the present disclosure may be practiced without these specific details. In some instances, well-known structures and devices are shown in block diagram form, rather than in detail, in order to avoid obscuring the present disclosure.

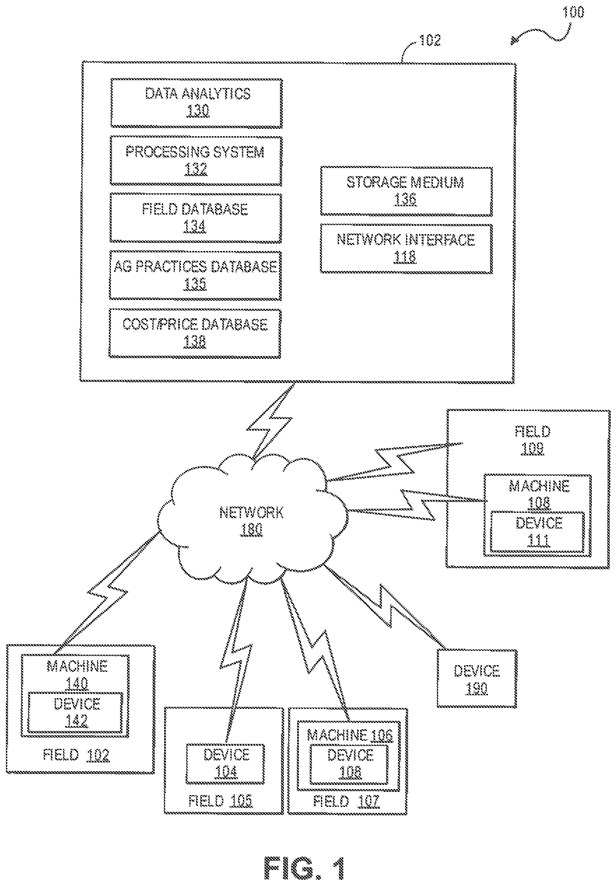

Figure 1 shows an example of a system for collecting and analyzing agricultural data from agricultural fields in order to display customized agricultural data in accordance with one embodiment. For example, in one embodiment, the system 100 may be implemented as a cloud based system with servers, data processing devices, computers, etc. Aspects, features, and functionality of the system 100 can be implemented in servers, harvesters (e.g., combine harvester), planters, planter monitors, drones, laptops, tablets, computer terminals, client devices, user devices, handheld computers, personal digital assistants, cellular telephones, cameras, smart phones, mobile phones, computing devices, or a combination of any of these or other data processing devices.

In other embodiments, the system includes a network computer or an embedded processing device within another device (e.g., display device) or within a machine (e.g., planter, combine), or other types of data processing systems having fewer components or perhaps more components than that shown in Figure 1. While illustrated with a monitor as the display device, the display device can by any display device, such as a monitor, a smartphone, a tablet, a personal computer, or any touch activated screen.

The system 100 (e.g., cloud based system) for collecting and analyzing agricultural data includes machines 140, 106, and 108 (e.g., harvesters, planters) for performing field operations (e.g., tillage, planting, fertilization, harvesting, etc). The machines can include devices (e.g., devices 142, 108, 111) in addition to other devices 104 and 190 (e.g., user devices, mobile device, tablet devices, drones, etc) for displaying customized agricultural data based on agricultural operations. The machines may also include sensors (e.g., image capturing devices, speed sensors, moisture sensors, auger sensors, mass flow sensors, head pressure sensors, seed sensors for detecting passage of seed, downforce sensors, actuator valves, OEM sensors, etc.) for capturing data of crops and soil conditions within associated fields (e.g., fields 102, 105, 107, 109). The system 100 includes an agricultural analysis system 102 and a storage medium 136 to store instructions, software, software programs, etc. for execution by the processing system 102 and for performing operations of the agricultural analysis system 102. A data analytics module 130 may perform analytics on agricultural data (e.g., images, field, yield, etc.) to generate crop predictions 162 relating to agricultural operations. For example, the crop predictions may predict yield (e.g., crop yield) based on development of crops (e.g., yield potential or ear potential for corn) at different growth stages.

A field information database 134 stores agricultural data (e.g., crop growth stage, soil types, soil characteristics, moisture holding capacity, etc.) for the fields that are being monitored by the system 100. An agricultural practices information database 135 stores farm practices information (e.g., harvesting information, as-applied planting information, fertilization information, planting population, applied nutrients (e.g., nitrogen), yield levels, proprietary indices (e.g., ratio of seed population to a soil parameter), etc.) for the fields that are being monitored by the system 100. A cost/price database 138 stores input cost information (e.g., cost of seed, cost of nutrients (e.g., nitrogen)) and commodity price information (e.g., revenue from crop).

**The** system 100 shown in Figure 1 may include a network interface 118 for communicating with other systems or devices such as drone devices, user devices, and machines (e.g., planters, combines) via a network 180 (e.g., Internet, wide area network, WiMax, satellite, cellular, 1P network, etc.). The network interface includes one or more types of transceivers for communicating via the network 180.

The processing system 132 may include one or more microprocessors, processors, a system on a chip (integrated circuit), or one or more microcontrollers. The processing system includes processing logic for executing software instructions of one or more programs. The system 100 includes the storage medium 136 for storing data and programs for execution by the processing system. The storage medium 136 can store, for example, software components such as a software application for capturing images and performing analysis of the capturing images or any other software application. The storage medium 136 can be any known form of a machine readable non-transitory storage medium, such as semiconductor memory (e.g., flash; SRAM; DRAM; etc.) or non-volatile memory, such as hard disks or solid-state drive.

While the storage medium (e.g., machine-accessible non-transitory medium) is shown in an exemplary embodiment to be a single medium, the term "machine-accessible non-transitory medium" should be taken to include a single medium or multiple media (e.g., a centralized or distributed database, and/or associated caches and servers) that store the one or more sets of instructions. The term "machine-accessible non-transitory medium" shall also be taken to include any medium that is capable of storing, encoding or carrying a set of instructions for execution by the machine and that cause the machine to perform any one or more of the methodologies of the present disclosure. The term "machine-accessible non-transitory medium" shall accordingly be taken to include, but not be limited to, solid-state memories, optical and magnetic media, and carrier wave signals.

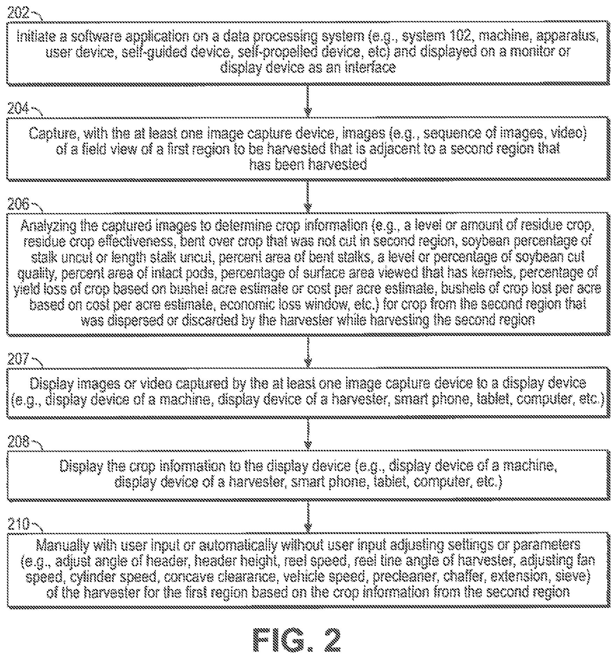

Figure 2 illustrates a flow diagram of one embodiment for a method 200 of adjusting settings of a harvester based on capturing images of field regions. The method 200 is performed by processing logic that may comprise hardware (circuitry, dedicated logic, etc.), software (such as is run on a general purpose computer system or a dedicated machine or a device), or a combination of both. In one embodiment, the method 200 is performed by processing logic of at least one data processing system (e.g., system 102, machine, apparatus, monitor, display device, user device, self-guided device, self-propelled device, etc). The data processing system executes instructions of a software application or program with processing logic. The software application or program can be initiated by the data processing system. In one example, a monitor or display device receives user input and provides a customized display for operations of the method 200.

At operation 202, a software application is initiated on a data processing system (e.g., system 102, machine, apparatus, user device, self-guided device, self-propelled device, etc) and displayed on a monitor or display device as an interface. The data processing system may be integrated with or coupled to a machine (e.g., harvester) that performs an application pass (e.g., harvesting). Alternatively, the data processing system may be integrated with an apparatus (e.g., drone, image capture device) associated with the machine that captures images during the application pass.

At least one image capturing device is mounted on a harvester to view the ground in front of the harvester, adjacent to the harvester, or just behind a header of the harvester. The at least one image capturing device can be positioned on the harvester to be in a row adjacent to a row that was previously harvested. At operation 204, the at least one image capture device captures images (e.g., sequence of images, video) of a field view of a first region to be harvested that is adjacent to a second region that has been harvested. The at least one image capturing device can be looking forward devices with respect to a direction of travel of the harvester that are positioned to view crops of the first region or downwards towards the ground.

At operation 206, the method includes analyzing the captured images to determine crop information (e.g., a level or amount of residue crop, residue crop effectiveness, crop header loss, bent over crop that was not cut in second region, soybean percentage of stalk uncut or length stalk uncut, percent area of bent stalks, a level or percentage of soybean cut quality, percent area of intact pods, percentage of surface area viewed that has kernels, percentage of yield loss of crop based on kilogrammes per hectare (bushel per acre) estimate or cost per hectare (acre) estimate, 2 kilogrammes (bushels) of crop lost per hectare (acre) based on cost per hectare (acre) estimate, economic loss window, etc.) for crop from the second region that was dispersed or discarded by the harvester while harvesting the second region. An Economic Loss Window preferably displays the economic loss value in dollars lost per hectare (acre) (SLoss/acre) attributable to the various yield robbing events. The calculated economic loss value may be continually displayed or the value may only be displayed only upon an alarm condition, such as when the value exceeds a predefined value, such as, for example, $3.00/acre. If an alarm condition is not present, the Economic Loss Window may simply display the word "Good" or some other desired designation. The Economic Loss Window may provide some sort of visual or audible alarm to alert the operator if the economic loss exceeds a predefined limit. Additionally, the Economic Loss Window may be associated or tied to other Windows (e.g., other Windows for harvesting settings such as angle of header, header height, reel speed, or reel tine angle of harvester) if an alarm condition is met in any of these other Windows, and such alarm condition is found to be the contributing factor to the alarm condition in the Economic Loss Window, then both Windows produce a visual or audible indication of the alarm condition. An ear loss, kernel loss, or header loss per row as determined by captured images can be used in determine the Economic Loss Window.

At operation 207, the method includes displaying images or video captured by the at least one image capture device to a display device (e.g., display device of a machine, display device of a harvester, smart phone, tablet, computer, etc.). At operation 208, the method includes displaying the crop information to the display device (e.g., display device of a machine, display device of a harvester, smart phone, tablet, computer, etc.). At operation 210, the method includes manually with user input or automatically without user input adjusting settings or parameters (e.g., adjust angle of header, header height, header speed, reel speed, reel tine angle, deck plate spacing, adjusting fan speed, cylinder speed, concave clearance, vehicle speed, precleaner, chaffer, extension, sieve, draper belt speed) of the harvester for the first region based on the crop information.

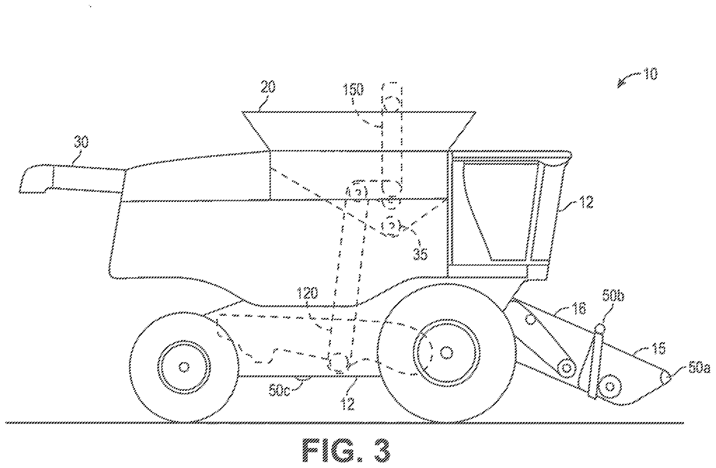

Figures 3-6 illustrate harvesters with imaging systems (e.g., image sensors, image capturing devices) positioned in different locations on each harvester in accordance with certain embodiments.

Figure 3 illustrates a harvester or combine 10 having an imaging system 50 (e.g., image capturing devices 50a, 50b, 50c) in accordance with one embodiment. In one example, device 50a is integrated with a front of a snout, device 50b is positioned on an upper region of the header 15, and device 50c is positioned or mounted on a chassis 12 of the harvester 10. As the operator in cab 12 drives the combine 10 through the field, the imaging system 50 captures images of unharvested crop in a first region to be harvested that is adjacent to a second region that has been harvested. The captured images are analyzed to determine crop information from the second region that was dispersed by the harvester while harvesting the second region. Settings of the harvester for the first region can be adjusted based on analyzing the captured images as discussed in the operations of method 200.

The crop being harvested is drawn through the header 15 which gathers the plant material and feeds it into the feederhouse 16. The feederhouse 16 carries the plant material into the combine where the grain is separated from the other plant material. The separated grain is then carried upward by the grain elevator 120 to the auger 150 which carries the grain into the grain tank 20. The other plant material is discharged out the back of the combine.

When the grain tank 20 becomes full, a transport vehicle such as grain cart, wagon or truck is driven up next to the combine or the combine drives to the awaiting transport vehicle. The unloading auger 30 is swung outwardly until the end is positioned over the awaiting transport vehicle. A cross-auger 35 positioned in the bottom of the grain tank 20 feeds the grain to the extended unloading auger 30 which in turn deposits the grain into the awaiting transport vehicle below.

Live or real-time yield monitoring during crop harvesting is known in the art, One type of commercially available yield monitor uses a mass flow sensor as disclosed in U.S. Pat. No. 5,343,761. Using the speed and the width of the pass being harvested (usually the width of the header), it is possible to obtain a yield rate in kilogrammes per hectares (bushels per acre) by dividing the mass of grain harvested over a particular time period by the area harvested. In addition to reporting the current yield rate, such systems often incorporate GPS or other positioning systems in order to associate each reported yield rate with a discrete location in the field. Thus a yield map may be generated for reference in subsequent seasons.

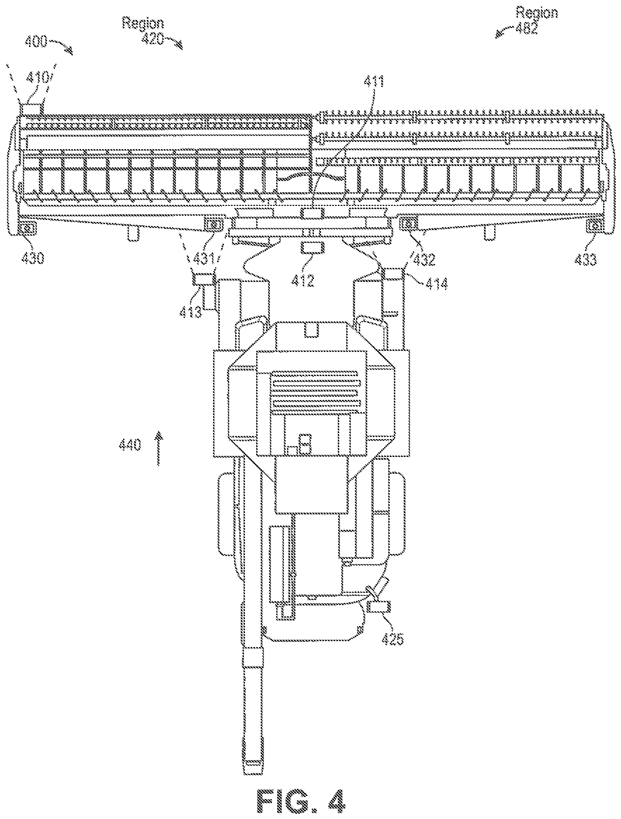

Referring to Figure 4, the harvester 400 (e.g., bean harvester) includes looking forward sensors 410-414 (e.g., image capturing devices, cameras) having a field of view that is forward in a direction of travel 440 of the harvester, looking rearward sensor 425 having a field of view that is backward in an opposite direction of travel 440, and looking down sensors 430-433 that view the ground surface of a field. The looking down sensors will see where beans are bent over or see intact pods not harvested. To correct, a harvester can adjust an angle of a header that is harvesting the crop. Also, angle of header, header height, header speed, reel speed, reel tine angle, deck plate spacing, adjusting fan speed, cylinder speed, concave clearance, vehicle speed, precleaner, chaffer, extension, sieve, or draper belt speed can be changed based on captured images.

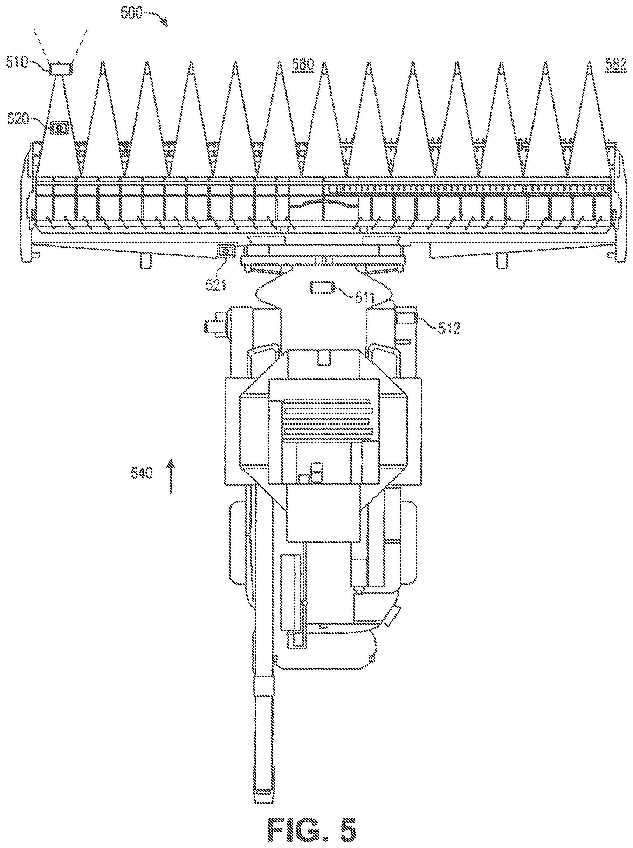

Referring to Figure 5, the harvester 500 (e.g., corn harvester) includes looking forward sensors 510-512 having a field of view that is forward in a direction of travel 540 of the harvester and looking down sensors 520-521 that view the ground surface of a field.

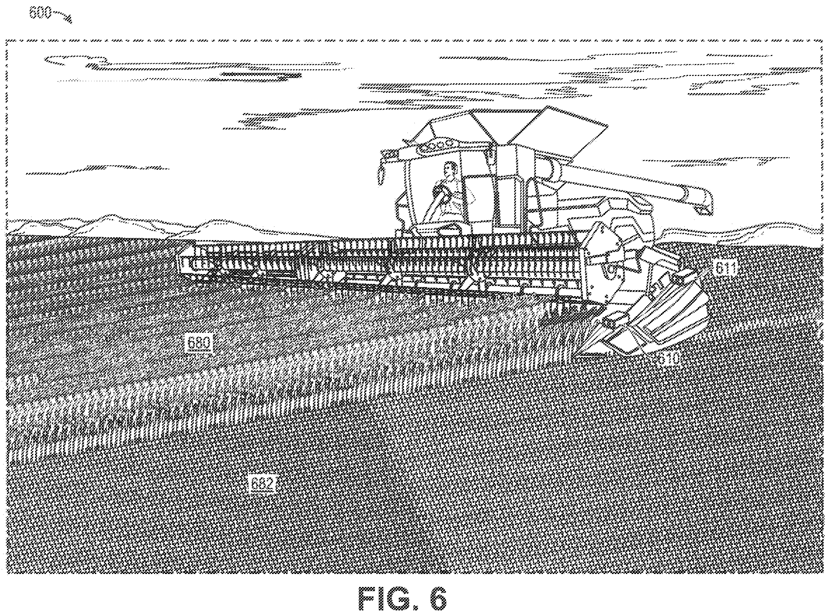

Referring to Figure 6, the harvester 600 (e.g., bean harvester) includes looking forward sensors 610-611 having a field of view that is forward in a direction of travel of the harvester.

As the operator drives the harvester (e.g., 400, 500, 600) through the field, the imaging system captures images of un harvesting crop in a first region (e.g., 420, 580, 680) to be harvested that is adjacent to a second region (e.g., 482., 582, 682) that has been harvested. The captured images are analyzed to determine crop information from the first region that was dispersed by the harvester while harvesting the second region. Settings of the harvester for the first region can be adjusted based on analyzing the captured images as discussed in the operations of method 200.

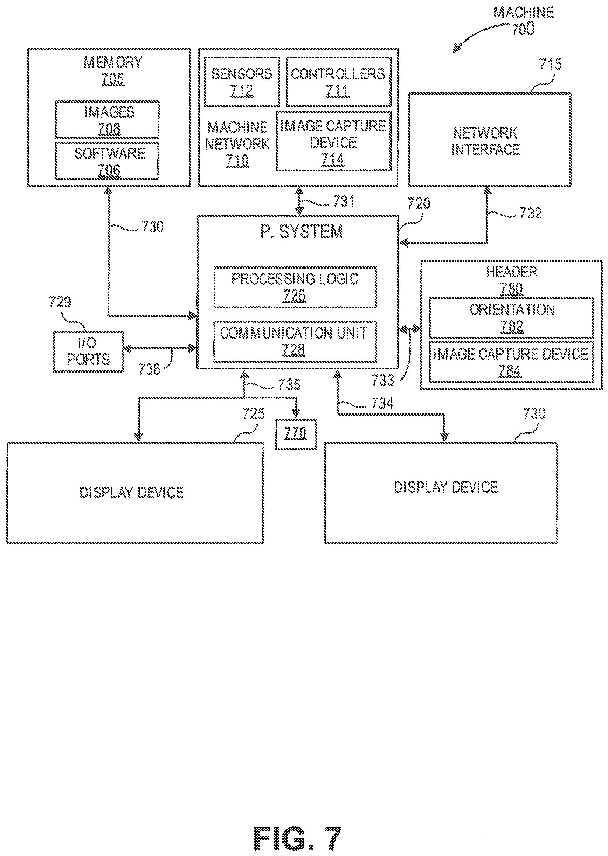

Figure 7 shows an example of a machine 700 (e.g., tractor, combine harvester, etc.) in accordance with one embodiment. The machine 700 includes a processing system 720, memory 705, machine network 710 (e.g., a controller area network (CAN) serial bus protocol network, an ISOBUS network, etc.), and a network interface 715 for communicating with other systems or devices. The machine network 710 includes sensors 712 (e.g., speed sensors, moisture sensor, auger sensor, mass flow sensor, head pressure sensor, etc.), controllers 711 (e.g., GPS receiver, radar unit) for controlling and monitoring operations of the machine, and image capture devices 714 (e.g., looking forward image capturing devices, rear looking image capturing devices, downward looking image capturing devices) for capturing images of crops and soil conditions of a field in accordance with embodiments of the present disclosure. The network interface 715 can include at least one of a GPS transceiver, a WLAN transceiver (e.g., WiFi), an infrared transceiver, a Bluetooth transceiver, Ethernet, cellular transceiver, or other interfaces from communications with other devices and systems including the implement 740. The network interface 715 may be integrated with the machine network 710 or separate from the machine network 710 as illustrated in Figure 7. The I/O ports 729 (e.g., diagnostic/on board diagnostic (OBD) port) enable communication with another data processing system or device (e.g., display devices, sensors, etc.).

In one example, the machine performs operations of a combine (combine harvester) for harvesting grain crops. The machine combines reaping, threshing, and winnowing operations in a single harvesting operation. A header 780 (e.g., grain platform, flex platform) includes a cutting mechanism to cause cutting of crops to be positioned into an auger or draper (belt feed). The header 780 includes an orientation device 782 or mechanism for orienting a crop (e.g., com, soybeans) for improving image capture with at least one image capture device 784.

The processing system 720 may include one or more microprocessors, processors, a system on a chip (integrated circuit), or one or more microcontrollers. The processing system includes processing logic 726 for executing software instructions of one or more programs and a communication unit 728 (e.g., transmitter, transceiver) for transmitting and receiving communications from the machine via machine network 710 or network interface 715 or implement via implement network 750 or network interface 760. The communication unit 728 may be integrated with the processing system or separate from the processing system. In one embodiment, the communication unit 728 is in data communication with the machine network 710 and implement network 750 via a diagnostic/OBD port of the I/O ports 729.

Processing logic 726 including one or more processors may process the communications received from the communication unit 728 including agricultural data. The system 700 includes memory 705 for storing data and programs for execution (software 706) by the processing system. The memory 705 can store, for example, software components such as image capture software, field view software for performing operations or methods of the present disclosure, or any other software application or module, images (e.g., captured images of crops), alerts, maps, etc. The memory 705 can be any known form of a machine readable non-transitory storage medium, such as semiconductor memory (e.g., flash; SRAM; DRAM; etc.) or non-volatile memory, such as hard disks or solid-state drive. The system can also include an audio input/output subsystem (not shown) which may include a microphone and a speaker for, for example, receiving and sending voice commands or for user authentication or authorization (e.g., biometrics).

The processing system 720 communicates bi-directionally with memory 705, machine network 710, network interface 715, header 780, display device 730, display device 725, and I/O ports 729 via communication links 730-736, respectively.

Display devices 725 and 730 can provide visual user interfaces for a user or operator. The display devices may include display controllers. In one embodiment, the display device 725 is a portable tablet device or computing device with a touchscreen that displays images (e.g., captured images and data (localized view map layer, high definition field maps of as-planted or as-harvested data or other agricultural variables or parameters, yield maps, alerts, economic loss data, seeds per area, cobs and cob size to determine performance, percent of cracked kernels, stand count data (number of stalks) to determine number of plants that germinated and grew, stalk diameter data measured from images, etc.)) generated by an agricultural data analysis software application or field view software application and receives input from the user or operator for a customized scale region and corresponding view of a region of a field, monitoring and controlling field operations, or any operations or methods of the present disclosure. The operations may include configuration of the machine or implement, reporting of data, control of the machine or implement including sensors and controllers (e.g., adjust angle of header, header height, header speed, reel speed, reel tine angle, deck plate spacing, adjusting fan speed, cylinder speed, concave clearance, vehicle speed, precleaner, chaffer, extension, sieve, draper belt speed) based on captured images from image capturing devices, and storage of the data generated. The display device 730 may be a display (e.g., display provided by an original equipment manufacturer (OEM)) that displays images and data for a localized view map layer, as-planted or as-harvested data, yield data, controlling a machine (e.g., planter, tractor, combine, sprayer, etc.), steering the machine, and monitoring the machine or an implement (e.g., planter, combine, sprayer, etc.) that is connected to the machine with sensors and controllers located on the machine or implement.

A cab control module 770 may include an additional control module for enabling or disabling certain components or devices of the machine or implement. For example, if the user or operator is not able to control the machine or implement using one or more of the display devices, then the cab control module may include switches to shut down or turn off components or devices of the machine or implement.

In one embodiment, a machine-accessible non-transitory medium (e.g., memory 705) contains executable computer program instructions which when executed by a data processing system cause the system to perform operations or methods of the present disclosure including customizing scale and corresponding field views of agricultural fields with expand and panning operations. While the machine-accessible non-transitory medium (e.g., memory 705) is shown in an exemplary embodiment to be a single medium, the term "machine-accessible non-transitory medium" should be taken to include a single medium or multiple media (e.g., a centralized or distributed database, and/or associated caches and servers) that store the one or more sets of instructions. The term "machine-accessible non-transitory medium" shall also be taken to include any medium that is capable of storing, encoding or carrying a set of instructions for execution by the machine and that cause the machine to perform any one or more of the methodologies of the present disclosure. The term "machine-accessible non-transitory medium" shall accordingly be taken to include, but not be limited to, solid-state memories, optical and magnetic media, and carrier wave signals.

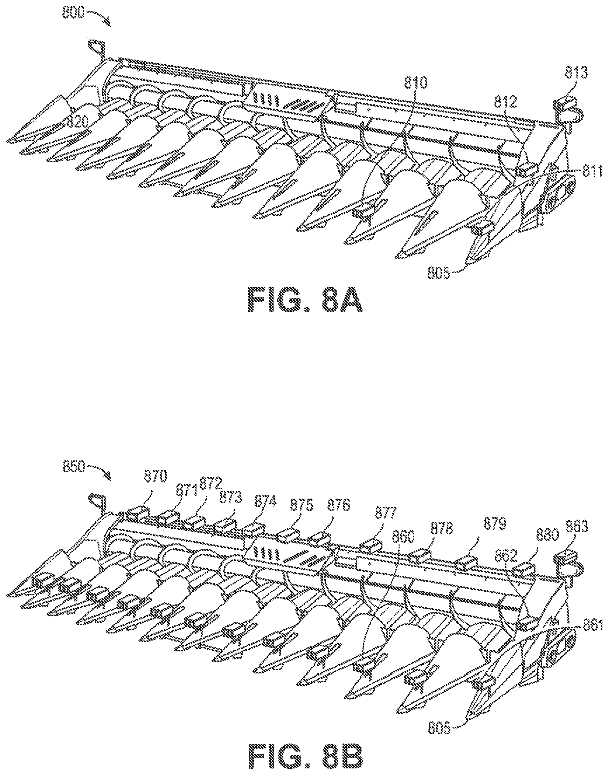

Figure 8A illustrates an example of a header having an image capturing system in accordance with certain embodiments. The header 800 includes a plurality of snouts 820 and image capturing devices 810-813 that can be mounted in various locations (e.g., on snout, within snout, integrated with a reflector).

In one example, the image capturing devices can only be located so far in (usually no more than 3 snouts) so that the devices can see seeds dispersed onto the ground from the prior row. The tip of the snout 805 could be replaced with a camera (e.g., image capturing device 810, 811) in a protective cover that matches the contour of the snout. An example is a camera in a dome.

Figure 8B illustrates an example of a header having an image capturing system in accordance with other embodiments. The header 850 includes a plurality of snouts and image capturing devices that can be mounted in various locations (e.g., on snout, within snout, integrated with a reflector). The image capturing devices 860-863 face forward to capture the number of seeds that were thrown from the prior pass of an adjacent region of the field. This header 850 may be a corn header to capture header loss at each row.

In this example, a plurality of image capturing devices 870-880 are positioned at each row after the header to capture the amount of seeds, which includes the number of seeds from the prior pass that were thrown. These devices 870-880 can be downward or rearward looking. By subtracting the prior seeds from images of devices 860-863 from the row amount from images captured by devices 870-880, this gives header loss at each row.

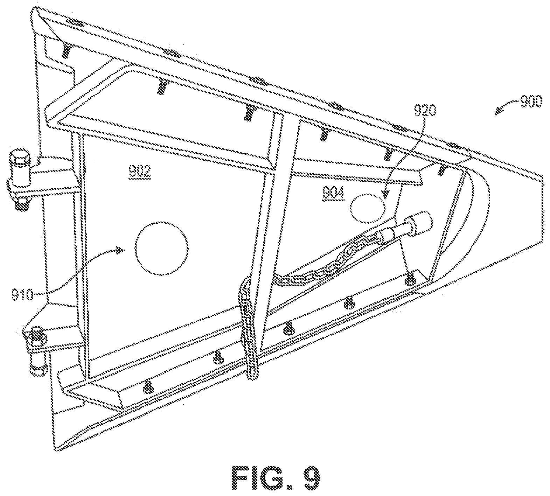

Also, there are places to mount an image capturing device under a snout 900 as illustrated in Figure 9. The image capturing devices 910 and 920 can be mounted on any surface (e.g., 902, 904) under a snout. Preferably, the image capturing devices would also need a light source.

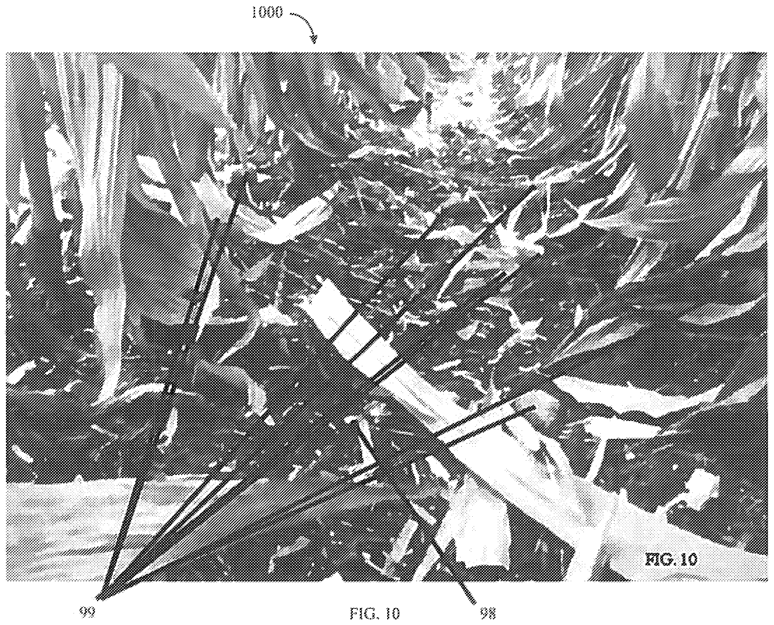

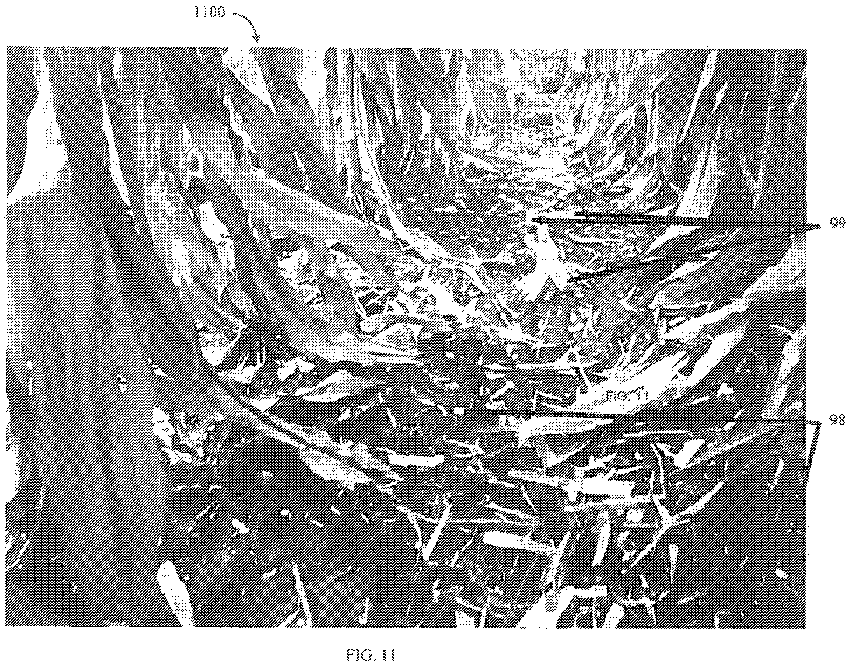

As the operator drives the harvester through the field, the imaging system captures images (e.g., an image 1000) as illustrated in Figure 10 of unharvesting crop in a first region to be harvested that is adjacent to a second region that has been harvested. The captured images are analyzed to determine crop information (e.g., cob data 99, kernel data 98) from the first region that was dispersed by the harvester while harvesting the second region. Figure 11 illustrates an image 1100 that has been captured by the imaging system of the harvester after settings of the harvester are adjusted based on analyzing the captured images as discussed in the operations of method 200. The image 1100 shows fewer cobs and kernels being dispersed from the second region, which reduces economic loss for the farmer.

It is to be understood that the above description is intended to be illustrative, and not restrictive. Many other embodiments will be apparent to those of skill in the art upon reading and understanding the above description. The scope of the invention should, therefore, be determined with reference to the appended claims.

## Claims

1. A computer implemented method (200) for adjusting settings of a harvester comprising:
capturing (204), with at least one image capture device that is located on the harvester,
images of a field view of an unharvested region to be harvested;
**characterized by**:
analyzing (206) the captured images to determine crop information for a crop dispersed by the harvester whilst harvesting a harvested region that is adjacent to the unharvested region; and
adjusting settings or operating parameters of the harvester (210) for the unharvested region based on the crop information for the crop of the harvested region.

2. The computer implemented method (200) of claim 1, wherein adjusting settings or operating parameters (210) comprises adjusting one or more of angle of header, header height, header speed, reel speed, reel tine angle, deck plate spacing, adjusting fan speed, cylinder speed, concave clearance, vehicle speed, precleaner, chaffer, extension, sieve, draper belt speed of the harvester for the unharvested region based on the crop information.

3. The computer implemented method (200) of claim 1, wherein the at least one image capturing device comprises a looking forward device that looks forward of the harvester, or the at least one image capturing device comprises a downward viewing device to view crops and a ground surface of the unharvested region.

4. The computer implemented method (200) of claim 1, further comprising:
displaying (207) images or video captured by the at least one image capture device to a display device, and/or
displaying (208) the crop information to a display device.

5. The computer implemented method (200) of claim 1, wherein adjusting settings or operating parameters (210) comprises automatically without user input adjusting settings or operating parameters of the harvester for the unharvested region based on the crop information.

6. The computer implemented method (200) of claim 1, wherein the crop information comprises one or more of a level or amount of residue crop or a residue crop effectiveness, bent over crop that was not cut, soybean percentage of stalk uncut or length stalk uncut, percent area of bent stalks, a level or percentage of soybean cut quality, percent area of intact pods, percentage of surface area viewed that has kernels, percentage of yield loss of crop based on kilogrammes per hectare (bushel per acre) estimate or cost per hectare (acre) estimate, kilogrammes (bushels) of crop lost per hectare (acre) based on cost per hectare (acre) estimate, or an economic loss window for crop from the harvested region that was dispersed or discarded by the harvester.

7. A combine harvester (10) comprising:
a header (15, 800) to engage a crop;
at least one image capturing device (50, 810) to capture images of an unharvested region in front of the combine harvester (10); and
at least one processor communicatively coupled to the at least one image capturing device, **characterized in that** the at least one processor is configured to execution instructions to analyze the captured images to determine crop information for a crop dispersed by the harvester whilst harvesting a harvested region that is adjacent to the unharvested region and to adjust settings or operating parameters of the combine harvester for the unharvested region based on the crop information for the crop of the harvested region.

8. The combine harvester (10) of claim 7, wherein the header includes a plurality of snouts (820) and at least one snout includes the at least one image capturing device that is integrated with a tip of the snout.

9. The combine harvester (10) of claim 8, wherein at least one of three outer most snouts (820) of the header (800) includes a looking forward image capturing device, or at least one image capturing device is positioned underneath a snout in a downward looking direction.

10. The combine harvester (10) of claim 7, wherein the at least one image capturing device (50, 810) is mounted on the header in a looking forward or downward direction.

11. The combine harvester (10) of claim 7, further comprising:
a chassis (12) to support the harvester with at least image capturing device (50) being mounted on the chassis.

12. The combine harvester (10) of claim 7, wherein to adjust settings or operating parameters comprises adjusting one or more of angle of header, header height, header speed, reel speed, reel tine angle, deck plate spacing, adjusting fan speed, cylinder speed, concave clearance, vehicle speed, precleaner, chaffer, extension, sieve, draper belt speed of the harvester for the unharvested region based on the crop information.

13. The combine harvester (10) of claim 7, further comprising:
a display device to display images or video captured by the at least one image capture device, optionally wherein the display device to display the crop information.

14. The combine harvester (10) of claim 7, wherein the crop information comprises a level or amount of residue crop or a residue crop effectiveness.

15. The combine harvester (10) of claim 7, wherein the at least one image capturing device (50) comprises a looking forward image capturing device positioned on a first outer edge of the header, an image capturing device positioned to view behind the header, a looking forward image capturing device positioned on a second outer edge of the header, and an image capturing device positioned on a frontal region of a frame of the harvester.

16. The combine harvester (10) of claim 15, wherein the looking forward image capturing devices (50) face forward to capture a number of seeds that were thrown from a prior pass of an adjacent harvested region of the field.

17. The combine harvester (10) of claim 16, wherein the image capturing device (50) is positioned to view behind the header to capture an amount of seeds after harvest for a current pass, which includes a number of seeds from the prior pass that were thrown.

18. The combine harvester (10) of claim 17, wherein the at least one processor is configured to execution instructions to determine a header loss at each row for a current pass based on the number of seeds from the prior pass and the amount of seeds for the current pass.

## Patentansprüche

1. Computerimplementiertes Verfahren (200) zum Anpassen von Einstellungen einer Erntemaschine, das Folgendes umfasst:
Aufnehmen (204) von Bildern einer Feldansicht eines nicht abgeernteten Gebiets, das abgeerntet werden soll, mit mindestens einer Bildaufnahmevorrichtung, die sich an der Erntemaschine befindet;
**gekennzeichnet durch**:
Analysieren (206) der aufgenommenen Bilder, um Erntegutinformationen für ein durch die Erntemaschine verstreutes Erntegut zu bestimmen, während ein abgeerntetes Gebiet, das zu dem nicht abgeernteten Gebiet benachbart ist, abgeerntet wird; und
Anpassen von Einstellungen oder Betriebsparametern der Erntemaschine (210) für das nicht abgeerntete Gebiet basierend auf den Erntegutinformationen für das Erntegut des abgeernteten Gebiets.

2. Computerimplementiertes Verfahren (200) nach Anspruch 1, wobei das Anpassen von Einstellungen oder Betriebsparametern (210) das Anpassen eines oder mehrerer eines Erntevorsatzwinkels, einer Erntevorsatzhöhe, einer Erntevorsatzgeschwindigkeit, einer Haspelgeschwindigkeit, eines Haspelzinkenwinkels, eines Deckplattenabstands, das Anpassen der Gebläsedrehzahl, der Zylinderdrehzahl, des Dreschkorbabstands, der Fahrzeuggeschwindigkeit, des Vorreinigers, des Obersiebs, der Verlängerung, des Siebs, der Draper-Band-Geschwindigkeit der Erntemaschine für das nicht abgeerntete Gebiet basierend auf den Erntegutinformationen umfasst.

3. Computerimplementiertes Verfahren (200) nach Anspruch 1, wobei die mindestens eine Bildaufnahmevorrichtung eine nach vorn blickende Vorrichtung, die von der Erntemaschine nach vorn blickt, umfasst oder wobei die mindestens eine Bildaufnahmevorrichtung eine nach unten sehende Vorrichtung, um Erntegut und eine Bodenoberfläche des nicht abgeernteten Gebiets zu sehen, umfasst.

4. Computerimplementiertes Verfahren (200) nach Anspruch 1, das ferner Folgendes umfasst:
Anzeigen (207) von Bildern oder Video, die durch die mindestens eine Bildaufnahmevorrichtung aufgenommen wurden, auf einer Anzeigevorrichtung und/oder
Anzeigen (208) der Erntegutinformationen auf einer Anzeigevorrichtung.

5. Computerimplementiertes Verfahren (200) nach Anspruch 1, wobei das Anpassen von Einstellungen oder Betriebsparametern (210) das automatische Anpassen von Einstellungen oder Betriebsparametern der Erntemaschine für das nicht abgeerntete Gebiet basierend auf den Erntegutinformationen ohne Benutzereingabe umfasst.

6. Computerimplementiertes Verfahren (200) nach Anspruch 1, wobei die Erntegutinformationen eines oder mehrere eines Niveaus oder einer Menge an Ernterückständen oder einer Ernterückstandseffektivität, von umgebogenem Erntegut, das nicht geschnitten wurde, des prozentualen Anteils von Sojabohnen ungeschnittener Halme oder der Länge ungeschnittener Halme, der prozentualen Fläche gebogener Halme, eines Niveaus oder prozentualen Anteils der Sojabohnenschnittqualität, der prozentualen Fläche unversehrter Hülsen, des prozentualen Anteils des gesehenen Flächeninhalts, der Körner aufweist, des prozentualen Anteils des Ertragsverlusts von Erntegut basierend auf einer Schätzung von Kilogramm pro Hektar (Buschel pro Acre) oder einer Schätzung von Kosten pro Hektar (Acre), der Kilogramm (Buschel) von Erntegut, das pro Hektar (Acre) verloren geht, basierend auf einer Schätzung von Kosten pro Hektar (Acre) oder einem Fenster wirtschaftlicher Verluste für Erntegut aus dem abgeernteten Gebiet, das von der Erntemaschine verstreut oder verworfen wurde, umfassen.

7. Mähdrescher (10), der Folgendes umfasst:
einen Erntevorsatz (15, 800), um mit Erntegut in Eingriff zu gelangen;
mindestens eine Bildaufnahmevorrichtung (50, 810) zum Aufnehmen von Bildern eines nicht abgeernteten Gebiets vor dem Mähdrescher (10); und
mindestens einen Prozessor, der mit der mindestens einen Bildaufnahmevorrichtung kommunikationstechnisch gekoppelt ist, **dadurch gekennzeichnet, dass** der mindestens eine Prozessor dazu ausgelegt ist, Anweisungen auszuführen, um die aufgenommenen Bilder zu analysieren, um Erntegutinformationen für Erntegut zu bestimmen, das durch die Erntemaschine verstreut wird, während ein abgeerntetes Gebiet, das zu dem nicht abgeernteten Gebiet benachbart ist, abgeerntet wird, und um Einstellungen oder Betriebsparameter des Mähdreschers für das nicht abgeerntete Gebiet basierend auf den Erntegutinformationen für das Erntegut des abgeernteten Gebiets anzupassen.

8. Mähdrescher (10) nach Anspruch 7, wobei der Erntevorsatz mehrere Schnauzen (820) beinhaltet und mindestens eine Schnauze die mindestens eine Bildaufnahmevorrichtung, die in eine Spitze der Schnauze integriert ist, beinhaltet.

9. Mähdrescher (10) nach Anspruch 8, wobei mindestens eine von drei äußersten Schnauzen (820) des Erntevorsatzes (800) eine nach vorn blickende Bildaufnahmevorrichtung beinhaltet oder mindestens eine Bildaufnahmevorrichtung unter einer Schnauze in einer nach unten blickenden Richtung positioniert ist.

10. Mähdrescher (10) nach Anspruch 7, wobei die mindestens eine Bildaufnahmevorrichtung (50, 810) in einer nach vorn oder nach unten blickenden Richtung an dem Erntevorsatz montiert ist.

11. Mähdrescher (10) nach Anspruch 7, der ferner Folgendes umfasst:
ein Fahrwerk (12) zum Tragen des Erntefahrzeugs, wobei mindestens die Bildaufnahmevorrichtung (50) an dem Fahrwerk montiert ist.

12. Mähdrescher (10) nach Anspruch 7, wobei das Anpassen von Einstellungen oder Betriebsparametern das Anpassen eines oder mehrerer eines Erntevorsatzwinkels, einer Erntevorsatzhöhe, einer Erntevorsatzgeschwindigkeit, einer Haspelgeschwindigkeit, eines Haspelzinkenwinkels, eines Deckplattenabstands, das Anpassen der Gebläsedrehzahl, der Zylinderdrehzahl, des Dreschkorbabstands, der Fahrzeuggeschwindigkeit, des Vorreinigers, des Obersiebs, der Verlängerung, des Siebs, der Draper-Band-Geschwindigkeit der Erntemaschine für das nicht abgeerntete Gebiet basierend auf den Erntegutinformationen umfasst.

13. Mähdrescher (10) nach Anspruch 7, der ferner Folgendes umfasst:
eine Anzeigevorrichtung zum Anzeigen von Bildern oder Video, die durch die mindestens eine Bildaufnahmevorrichtung aufgenommen wurden, wobei die Anzeigevorrichtung optional die Erntegutinformationen anzeigen soll.

14. Mähdrescher (10) nach Anspruch 7, wobei die Erntegutinformationen ein Niveau oder eine Menge an Resterntegut oder eine Resternteguteffektivität umfassen.

15. Mähdrescher (10) nach Anspruch 7, wobei die mindestens eine Bildaufnahmevorrichtung (50) eine nach vorn blickende Bildaufnahmevorrichtung, die an einer ersten Außenkante des Erntevorsatzes positioniert ist, eine Bildaufnahmevorrichtung, die positioniert ist, um hinter den Erntevorsatz zu sehen, eine nach vorn blickende Bildaufnahmevorrichtung, die an einer zweiten Außenkante des Erntevorsatzes positioniert ist, und eine Bildaufnahmevorrichtung, die an einem vorderen Bereich eines Rahmens des Erntefahrzeugs positioniert ist, umfasst.

16. Mähdrescher (10) nach Anspruch 15, wobei die nach vorne blickenden Bildaufnahmevorrichtungen (50) nach vorn zeigen, um eine Anzahl von Saatkörnern, die von einem vorherigen Durchlauf eines benachbarten abgeernteten Gebiets des Feldes geworfen wurden, aufzunehmen.

17. Mähdrescher (10) nach Anspruch 16, wobei die Bildaufnahmevorrichtung (50) positioniert ist, hinter den Erntevorsatz zu sehen, um eine Menge von Saatkörnern nach der Ernte für einen aktuellen Durchlauf, die eine Anzahl von Saatkörnern aus dem vorherigen Durchlauf, die geworfen wurden, beinhaltet, aufzunehmen.

18. Mähdrescher (10) nach Anspruch 17, wobei der mindestens eine Prozessor dazu ausgelegt ist, Anweisungen auszuführen, um basierend auf der Anzahl von Saatkörnern aus dem vorherigen Durchlauf und der Menge von Saatkörnern für den aktuellen Durchlauf einen Erntevorsatzverlust an jeder Reihe für einen aktuellen Durchlauf zu bestimmen.

## Revendications

1. Procédé (200), mis en œuvre par ordinateur, d'ajustement de réglages d'une récolteuse, comprenant :
la capture (204), au moyen d'au moins un dispositif de capture d'images situé sur la récolteuse, d'images d'une vue d'une zone non récoltée d'un champ devant être récoltée ;
**caractérisé par** :
l'analyse (206) des images capturées afin de déterminer des informations de culture pour une culture dispersée par la récolteuse pendant la récolte d'une zone récoltée qui est adjacente à la zone non récoltée ; et
l'ajustement de réglages ou de paramètres de fonctionnement de la récolteuse (210) pour la zone non récoltée sur la base des informations de culture pour la culture de la zone récoltée.

2. Procédé (200) mis en œuvre par ordinateur selon la revendication 1, dans lequel l'ajustement de réglages ou de paramètres de fonctionnement (210) comprend l'ajustement d'un ou de plusieurs éléments parmi un angle de tête de coupe, une hauteur de tête de coupe, une vitesse de tête de coupe, une vitesse de rabatteur, un angle de dents de rabatteur, un écartement de plaques cueilleuses, l'ajustement d'une vitesse de ventilateur, une vitesse de batteur, un dégagement de contre-batteur, une vitesse de véhicule, un pré-nettoyeur, une grille supérieure, une rallonge, une grille inférieure, une vitesse de tapis convoyeur de la récolteuse pour la zone non récoltée sur la base des informations de culture.

3. Procédé (200) mis en œuvre par ordinateur selon la revendication 1, dans lequel l'au moins un dispositif de capture d'images comprend un dispositif regardant vers l'avant qui regarde vers l'avant de la récolteuse, ou l'au moins un dispositif de capture d'images comprend un dispositif de visualisation vers le bas destiné à visualiser des cultures et une surface du sol de la zone non récoltée.

4. Procédé (200) mis en œuvre par ordinateur selon la revendication 1, comprenant en outre :
l'affichage (207), sur un dispositif d'affichage, d'images ou d'une vidéo capturées par l'au moins un dispositif de capture d'images, et/ou
l'affichage (208), sur un dispositif d'affichage, des informations de culture.

5. Procédé (200) mis en œuvre par ordinateur selon la revendication 1, dans lequel l'ajustement de réglages ou de paramètres de fonctionnement (210) comprend l'ajustement automatique, sans entrée d'utilisateur, de réglages ou de paramètres de fonctionnement de la récolteuse pour la zone non récoltée sur la base des informations de culture.

6. Procédé (200) mis en œuvre par ordinateur selon la revendication 1, dans lequel les informations de culture comprennent un ou plusieurs éléments parmi un niveau ou une quantité de culture résiduelle ou une efficacité de culture résiduelle, une culture versée qui n'a pas été coupée, un pourcentage non coupé d'une tige de soja ou une longueur non coupée d'une tige, une superficie, en pour cent, occupée par des tiges courbées, un niveau ou un pourcentage de qualité de coupe du soja, une superficie, en pour cent, occupée par des gousses intactes, un pourcentage de surface visualisée qui présente des grains, un pourcentage de perte de rendement de culture sur la base d'une estimation en kilogrammes par hectare (boisseaux par acre) ou d'une estimation de coût par hectare (acre), des kilogrammes (boisseaux) de culture perdus par hectare (acre) sur la base d'une estimation de coût par hectare (acre), ou une fenêtre de perte économique pour une culture provenant de la zone récoltée qui a été dispersée ou rejetée par la récolteuse.

7. Moissonneuse-batteuse (10) comprenant :
une tête de coupe (15, 800) destinée à venir en prise avec une culture ;
au moins un dispositif de capture d'images (50, 810) destiné à capturer des images d'une zone non récoltée devant la moissonneuse-batteuse (10) ; et
au moins un processeur couplé en communication avec l'au moins un dispositif de capture d'images, **caractérisée en ce que** l'au moins un processeur est configuré pour exécuter des instructions afin d'analyser les images capturées pour déterminer des informations de culture pour une culture dispersée par la moissonneuse-batteuse pendant la récolte d'une zone récoltée qui est adjacente à la zone non récoltée, et pour ajuster des réglages ou des paramètres de fonctionnement de la moissonneuse-batteuse pour la zone non récoltée sur la base des informations de culture pour la culture de la zone récoltée.

8. Moissonneuse-batteuse (10) selon la revendication 7, dans laquelle la tête de coupe comporte une pluralité de becs (820) et au moins un bec comporte l'au moins un dispositif de capture d'images qui est intégré à une extrémité du bec.

9. Moissonneuse-batteuse (10) selon la revendication 8, dans laquelle au moins l'un des trois becs (820) situés le plus à l'extérieur de la tête de coupe (800) comporte un dispositif de capture d'images regardant vers l'avant, ou au moins un dispositif de capture d'images est positionné sous un bec dans une direction de regard vers le bas.

10. Moissonneuse-batteuse (10) selon la revendication 7, dans laquelle l'au moins un dispositif de capture d'images (50, 810) est monté sur la tête de coupe dans une direction de regard vers l'avant ou vers le bas.

11. Moissonneuse-batteuse (10) selon la revendication 7, comprenant en outre :
un châssis (12) destiné à supporter la moissonneuse-batteuse, au moins un dispositif de capture d'images (50) étant monté sur le châssis.

12. Moissonneuse-batteuse (10) selon la revendication 7, dans laquelle l'ajustement de réglages ou de paramètres de fonctionnement comprend l'ajustement d'un ou de plusieurs éléments parmi un angle de tête de coupe, une hauteur de tête de coupe, une vitesse de tête de coupe, une vitesse de rabatteur, un angle de dents de rabatteur, un écartement de plaques cueilleuses, l'ajustement d'une vitesse de ventilateur, une vitesse de batteur, un dégagement de contre-batteur, une vitesse de véhicule, un pré-nettoyeur, une grille supérieure, une rallonge, une grille inférieure, une vitesse de tapis convoyeur de la moissonneuse-batteuse pour la zone non récoltée sur la base des informations de culture.

13. Moissonneuse-batteuse (10) selon la revendication 7, comprenant en outre :
un dispositif d'affichage destiné à afficher des images ou une vidéo capturées par l'au moins un dispositif de capture d'images, facultativement dans laquelle le dispositif d'affichage est destiné à afficher les informations de culture.

14. Moissonneuse-batteuse (10) selon la revendication 7, dans laquelle les informations de culture comprennent un niveau ou une quantité de culture résiduelle ou une efficacité de culture résiduelle.

15. Moissonneuse-batteuse (10) selon la revendication 7, dans laquelle l'au moins un dispositif de capture d'images (50) comprend un dispositif de capture d'images regardant vers l'avant positionné sur un premier bord extérieur de la tête de coupe, un dispositif de capture d'images positionné de manière à visualiser derrière la tête de coupe, un dispositif de capture d'images regardant vers l'avant positionné sur un deuxième bord extérieur de la tête de coupe, et un dispositif de capture d'images positionné sur une zone frontale d'un bâti de la moissonneuse-batteuse.

16. Moissonneuse-batteuse (10) selon la revendication 15, dans laquelle les dispositifs de capture d'images regardant vers l'avant (50) sont tournés vers l'avant afin de capturer un certain nombre de graines qui ont été projetées lors d'un passage antérieur dans une zone récoltée adjacente du champ.

17. Moissonneuse-batteuse (10) selon la revendication 16, dans laquelle le dispositif de capture d'images (50) est positionné de manière à visualiser derrière la tête de coupe afin de capturer une quantité de graines après la récolte pour un passage en cours, cette quantité comportant un certain nombre de graines provenant du passage antérieur qui ont été projetées.

18. Moissonneuse-batteuse (10) selon la revendication 17, dans laquelle l'au moins un processeur est configuré pour exécuter des instructions afin de déterminer une perte au niveau de la tête de coupe à chaque rangée pour un passage en cours sur la base du nombre de graines provenant du passage antérieur et de la quantité de graines pour le passage en cours.
